# EUROPÄISCHE PATENTANMELDUNG

(11) **EP 0 786 652 A1**
(43) Veröffentlichungstag der Anmeldung: **30.07.1997**
(21) Anmeldenummer: 97101175.4
(22) Anmeldetag: 25.01.1997
(51) Int. Cl.: G01L 19/14, G01L 19/00, G01L 19/08, G01L 9/00, H02B 1/34, H02B 1/36, H05K 5/00

(54) **Elektronischer Drucksensor**

(30) Priorität: 29.01.1996 DE 29601451 U
(71) Anmelder: Scharco Elektronik GmbH & Co KG, 42277 Wuppertal (DE)
(72) Erfinder: Frede, Dieter, 59320 Ennigerloh (DE); Heimbrecht, Bernhard, 42105 Wuppertal (DE)
(74) Vertreter: Spalthoff, Adolf, Dipl.-Ing.

(57) **Zusammenfassung**

Die Erfindung betrifft einen elektronischen Drucksensor, der mittels einer Druckleitung, z.B. mittels eines Schlauchs, an eine zu überwachende Druckquelle angeschlossen ist. Um einen elektronischen Drucksensor zu schaffen, dessen Montage erheblich vereinfacht ist, wird erfindungsgemäß vorgeschlagen, daß der elektronische Drucksensor in einem separaten, in einem Schaltschrank aufnehmbaren Standardgehäuse untergebracht ist, dessen Bauform mit der anderer im Schaltschrank befindlicher elektrischer und/oder elektronischer Bausteine, z.B. mit der von Zeitrelais, übereinstimmt und an dem Klemmen (1, 6) für die Stromversorgung und die Signalausgabe sowie ein Anschlußnippel (3) für die Druckleitung vorgesehen sind.

## Beschreibung

Die Erfindung bezieht sich auf einen elektronischen Drucksensor, der mittels einer Druckleitung, z.B. mittels eines Schlauchs, an eine zu überwachende Druckquelle angeschlossen ist.

Zur Überwachung von Druckquellen, z.B. von Pumpen oder Kompressoren, werden zur Zeit hauptsächlich elektromechanische Druckschalter eingesetzt, die im wesentlichen aus einer Membran mit einer Gegendruckfeder und einem Schaltkontakt bestehen.

Des weiteren ist es möglich, elektronische Drucksensoren einzusetzen, die in einem eigenen Gehäuse gekapselt sind, welches mit einem Stecker oder mit Schraubklemmen ausgerüstet ist, die zum Anschluß an eine Auswerteelektronik vorgesehen sind.

Weiterhin sind seit einiger Zeit elektronische Drucksensoren in Form integrierter Bausteine erhältlich, die zum Einbau in eine gedruckte Schaltung vorgesehen sind. In aufwendigeren Steuerungen werden diese integrierten Bausteine teilweise direkt in eine Leiterplatte eingelötet. Der zu messende Druck wird dann über eine Druckleitung in Form eines Schlauchs an diesen integrierten Baustein herangeführt.

Bei Kompressorsteuerungen wird üblicherweise ein elektromechanischer Druckschalter am Kompressorkessel befestigt. Das elektrische Ausgangssignal des elektromechanischen Druckschalters wird über ein geeignetes Kabel zu einem Schaltschrank geführt. In dem Schaltschrank befinden sich Zeitrelais und Schütze, die gemeinsam mit dem elektromechanischen Druckschalter einen Regelkreis für den Kompressormotor bilden.

Des weiteren sind Kompressorsteuerungen bekannt geworden, bei denen der elektromechanische Druckschalter in den Schaltschrank eingebaut ist, da es einfacher und weniger kostenaufwendig ist, die Druckleitung zum Schaltschrank zu führen, als temperaturfeste und ölbeständige elektrische Kabel und Steckverbindungen einzusetzen.

Der Erfindung liegt die Aufgabe zugrunde, einen elektronischen Drucksensor zu schaffen, dessen Montage erheblich vereinfacht ist.

Diese Aufgabe wird erfindungsgemäß dadurch gelöst, daß der elektronische Drucksensor in einem separaten, in einem Schaltschrank aufnehmbaren Standardgehäuse aufgenommen ist, dessen Bauform mit der anderer im Schaltschrank befindlicher elektrischer oder elektronischer Bausteine, z.B. der von Zeitrelais, übereinstimmt und an dem Klemmen für die Stromversorgung und die Signalausgabe sowie ein Anschlußnippel für die Druckleitung vorgesehen sind. Hierdurch wird gewährleistet, daß aus dem elektronischen Drucksensor bzw. aus der ihn aufnehmenden Steuerung keine Störungen nach außen und auch von außen keine Störungen in die Steuerung gelangen. Gegenüber herkömmlichen elektromechanischen Druckschaltern weist ein derartiger elektronischer Drucksensor eine erheblich größere Genauigkeit der Schaltpunkte und der Hysterese auf. Seine Lebensdauer ist im Vergleich zu elektromechanischen Druckschaltern erheblich länger. Mit einem derartigen elektronischen Drucksensor ist es möglich, fünf und mehr Schaltpunkte auszuwerten.

Sofern am Standardgehäuse des elektronischen Drucksensors Halteglieder für eine Schnellbefestigung an genormten Klemmschienen vorgesehen sind, kann der elektronische Drucksensor in einfacher Weise auf die genormten Klemmschienen aufgeschoben und dort neben anderen Bausteinen befestigt werden.

Beim Einsatz des erfindungsgemäßen elektronischen Drucksensors zur Überwachung bzw. zur Regelung eines Kompressors einer Pumpe od.dgl., ist sichergestellt, daß aufgrund der Kompressionswärme auftretende hohe Temperaturen von der elektronischen Steuerung ferngehalten werden. Große Druckschwankungen und Druckstöße gelangen über die Druckleitung nur gedämpft bis zum elektronischen Drucksensor.

Der erfindungsgemäße elektronische Drucksensor kann Teil einer Baureihe ähnlicher Sensoren, z.B. für Temperatur-, Strom- und Spannungsmessung sein.

Im folgenden wird die Erfindung an Hand von Ausführungsformen unter Bezugnahme auf die Zeichnung näher erläutert.

Es zeigen:
- Figur 1: eine perspektivische Darstellung einer ersten Ausführungsform eines erfindungsgemäßen elektronischen Drucksensors;
- Figur 2: eine Aufsicht einer zweiten Ausführungsform des erfindungsgemäßen elektronischen Drucksensors;
- Figur 3: ein Blockschaltbild des in Figur 2 dargestellten Drucksensors;
- Figur 4: eine Aufsicht einer als Druckschalter ausgebildeten dritten Ausführungsform des erfindungsgemäßen elektronischen Drucksensors;
- Figur 5: ein Blockschaltbild des in Figur 4 dargestellten Druckschalters;
- Figur 6: eine Aufsicht einer als Druckschalter ausgebildeten vierten Ausführungsform des erfindungsgemäßen elektronischen Drucksensors;
- Figur 7: ein Blockschaltbild des in Figur 6 dargestellten Druckschalters;
- Figur 8: eine Aufsicht einer als Druckschalter ausgebildeten fünften Ausführungsform des erfindungsgemäßen elektronischen Druckschalters; und
- Figur 9: ein Blockschaltbild des in Figur 8 dargestellten Druckschalters.

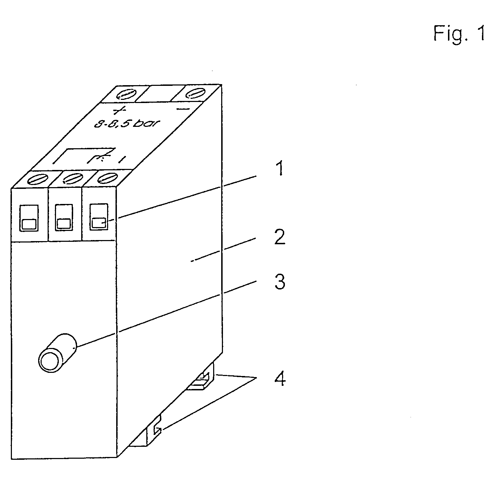

Ein in Figur 1 dargestellter erfindungsgemäßer elektronischer Drucksensor hat ein Standardgehäuse 2. Dieses Standardgehäuse 2 hat dieselben Abmessungen wie andere in einem Schaltschrank üblicherweise angeordnete Bausteine. Das Standardgehäuse weist elektrische Anschlußklemmen 1 für die Stromversorgung und für die Signalausgabe auf. Zusätzlich hat das Standardgehäuse 2 einen Anschlußnippel 3 für eine vorzugsweise als Druckschlauch ausgebildete Druckleitung. In der in Figur 1 dargestellten Ausführungsform hat das Standardgehäuse darüber hinaus Halteglieder 4, die zur Schnellbefestigung des Standardgehäuses 2 auf in herkömmlichen Schaltschränken vorhandene Normschienen aufschiebbar und dort fest anbringbar sind.

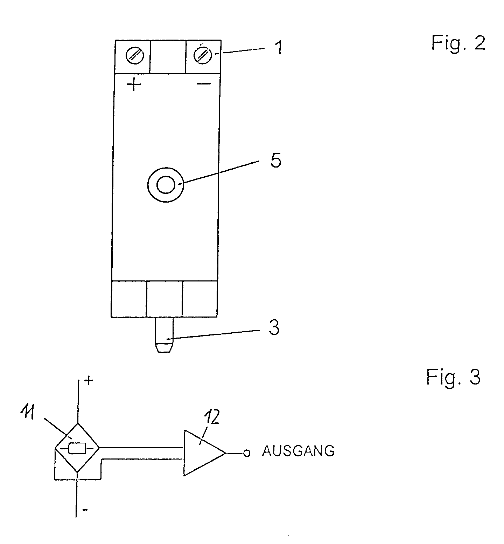

Bei dem in Figur 2 dargestellten elektronischen Drucksensor handelt es sich um die einfachste Ausführungsform des erfindungsgemäßen elektronischen Drucksensors. Er hat einen elektrischen Analogausgang 5 für den Ausgang eines elektrischen Signals sowie die Anschlußklemmen 1 für die Stromversorgung.

Wie aus dem in Figur 3 dargestellten Blockschaltbild des elektronischen Drucksensors gemäß Figur 2 hervorgeht, wird das Ausgangssignal eines elektronischen Drucksensorelements 11 über einen geeigneten Verstärker 12 so verstärkt, daß an einem Ausgang des elektronischen Drucksensors ein Normsignal von z.B. 0 bis 10 V oder 4 bis 20 mA zur Verfügung steht bzw. ausgegeben wird. An diesen Ausgang können verschiedene Normanzeige- oder -Auswertegeräte angeschlossen werden, z.B. ein Analog-Voltmeter 0 bis 10 V, entsprechend 0 bis 10 bar, ein Digital-Voltmeter 0 bis 10,0 V, entsprechend 0 bis 10,0 bar, ein Standard-PID-Regler mit einem Normeingang 0 bis 10 V oder eine elektronische Auswerteschaltung mit einem Normeingang 0 bis 10 V. Selbstverständlich ist es möglich, gleichzeitig mehrere unterschiedliche Auswerte- und Anzeigegeräte anzuschließen.

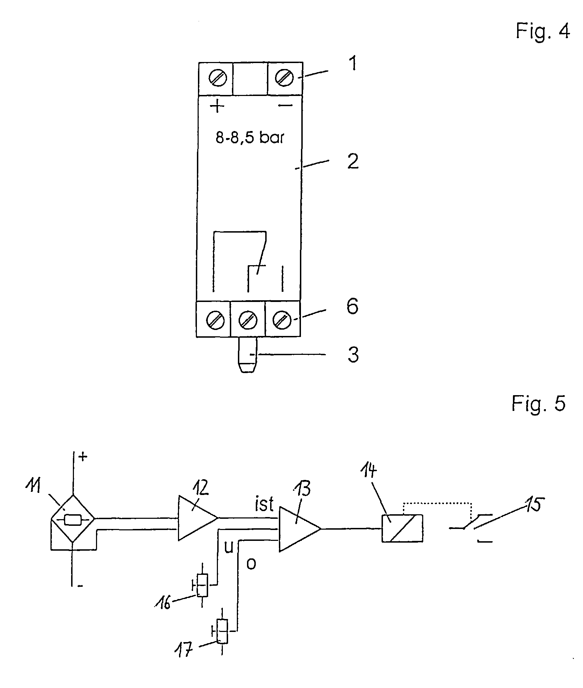

Bei der in Figur 4 dargestellten Ausführungsform des erfindungsgemäßen Drucksensors handelt es sich um das einfachste Ausführungsbeispiel eines Druckschalters. Zusätzlich zu den im Zusammenhang mit Figur 4 beschriebenen Bauteilen hat der in den Figuren 4 und 5 dargestellte elektronische Druckschalter Relaiskontakte 15, die an am Standardgehäuse 2 ausgestaltete Anschlußklemmen 6 herausgeführt sind. Aus dem in Figur 5 dargestellten Blockschaltbild ergibt sich, daß dem Drucksensorelement 11 und dem Verstärker 12 eine Schaltstufe 13 mit zwei Schaltwerten nachgeschaltet ist. Von der Schaltstufe 13 gelangt das Signal über ein Ausgangsrelais 14 mit den Relaiskontakten 15 zum Ausgang. Die beiden an der Schaltstufe 13 zur Verfügung gestellten Schaltwerte werden durch ein erstes Einstellpotentiometer 16 für den unteren Schaltpunkt bzw. ein zweites Einstellpotentiometer 17 für den oberen Schaltpunkt erzeugt.

Der in den Figuren 4 und 5 dargestellte elektronische Druckschalter benötigt den unteren Schaltpunkt und den oberen Schaltpunkt, wobei das Ausgangsrelais 14 beim oberen Schaltpunkt schaltet und beim unteren Schaltpunkt zurückschaltet. Die Differenz zwischen dem oberen Schaltpunkt und dem unteren Schaltpunkt bezeichnet man als Hysterese. Eine derartige definierte Hysterese ist erforderlich, um eine zu hohe Schalthäufigkeit des an den elektronischen Druckschalter angeschlossenen Motors od.dgl. zu verhindern. Der Ausgang 15 des in den Figuren 4 und 5 dargestellten elektronischen Druckschalters läßt sich unmittelbar an einen Kompressormotor oder eine Pumpe anschließen. Der an Hand der Figuren 4 und 5 erläuterte elektronische Druckschalter kann somit als vollständige Kompressor- oder Pumpensteuerung eingesetzt werden.

Selbstverständlich ist es möglich, die Einstellpotentiometer 16, 17 aus dem Standardgehäuse 2 herauszuführen, so daß sowohl der obere Schaltpunkt als auch der untere Schaltpunkt bzw. die Schaltschwellen jederzeit variierbar sind.

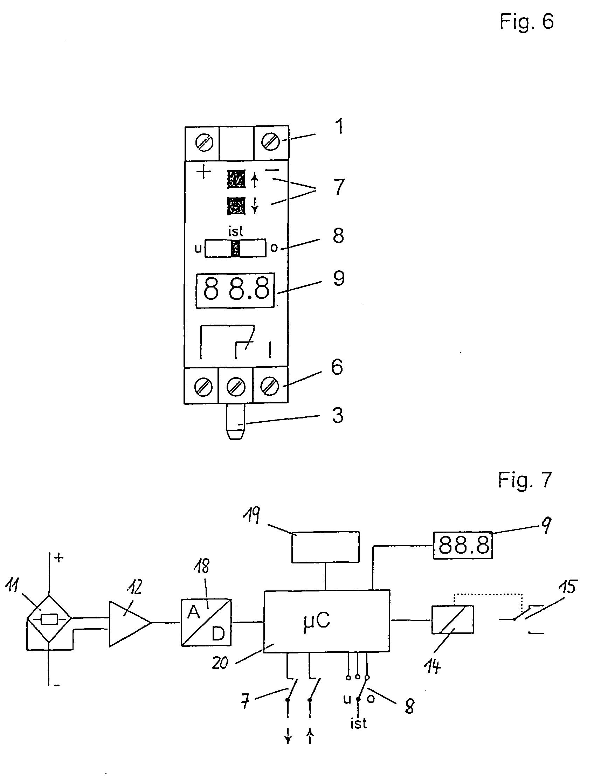

Ein in den Figuren 6 und 7 dargestellter erfindungsgemäßer elektronischer Druckschalter weist eine Digitalanzeige 9 auf, mittels der es möglich ist, sowohl den Ist-Wert des erfaßten Druckes als auch die untere und obere Schaltschwelle jederzeit abzulesen. Dieser elektronische Druckschalter hat zwei Tasten 7, mittels denen die Schaltpunkte bzw. die obere und die untere Schaltschwelle verstellbar sind. In der dargestellten Ausführungsform dient die obere Taste 7 zur Erhöhung, die untere Taste 7 zur Absenkung der Schaltschwellen.

Des weiteren ist am Standardgehäuse 2 dieses mit der Digitalanzeige 9 versehenen elektronischen Druckschalters ein Umschalter 8 ausgebildet, mittels dem die Digitalanzeige 9 auf die untere Schaltschwelle, den tatsächlich anliegenden Druck oder die obere Schaltschwelle einstellbar ist.

Aus dem in Figur 7 dargestellten Blockschaltbild des elektronischen Druckschalters mit der Digitalanzeige 9 geht hervor, daß dem eigentlichen Drucksensorelement 11 und dem Verstärker 12 ein Analog-Digitalwandler 18 nachgeschaltet ist, mittels dem das durch den Verstärker 12 zur Verfügung gestellte verstärkte Analogsignal in ein Digitalsignal umgewandelt wird. Das Digitalsignal wird in einen Microcomputer 20 eingegeben. Im Microcomputer 20 wird das Digitalsignal verarbeitet. Der Microcomputer 20 ist an die am Standardgehäuse 2 vorgesehenen Tasten 7 angeschlossen, mittels denen die Schaltschwellen bzw. der obere und der untere Schaltpunkt verändert werden können. Des weiteren ist der Microcomputer 20 an den Umschalter 8 angeschlossen, mittels dem die Digitalanzeige 9, die ebenfalls an den Microcomputer 20 angeschlossen ist, auf den oberen Schaltpunkt, den unteren Schaltpunkt oder den Ist-Wert eingestellt werden kann.

Außerdem ist dem Microcomputer 20 ein Speicher 19 zugeordnet, in dem die einmal eingestellten Schaltschwellen bzw. der obere und der untere Schaltpunkt auch bei einem Spannungsabfall gespeichert werden können.

Auch bei der an Hand der Figuren 6 und 7 dargestellten und erläuterten Ausführungsform des erfindungsgemäßen elektronischen Druckschalters sind alternative Ausführungsbeispiele denkbar; z.B. kann zusätzlich ein Analogausgang vorgesehen sein, wie es bei dem elektronischen Drucksensor gemäß den Figuren 2 und 3 beschrieben wurde.

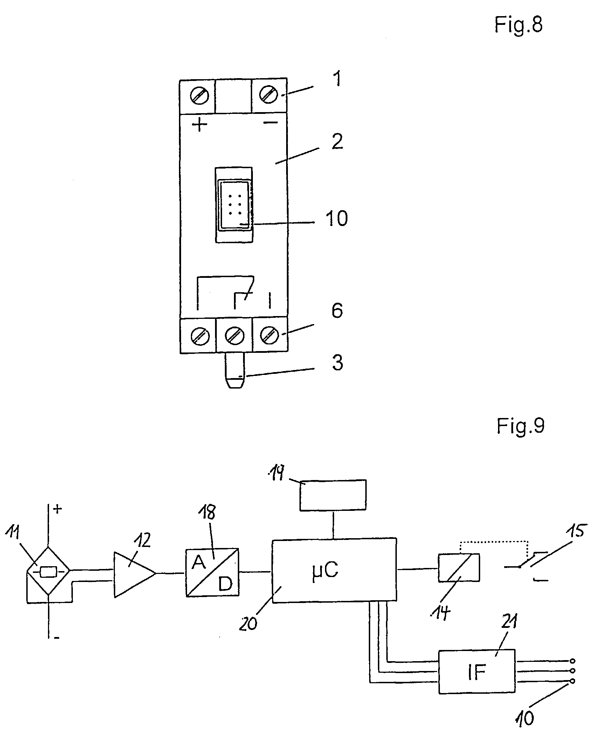

Bei dem in den Figuren 8 und 9 dargestellten erfindungsgemäßen elektronischen Druckschalter ist eine Fernsteuerung vorgesehen. Bei größeren Kompressoranlagen sind mehrere Schaltpunkte, die an verschiedenen Stellen der Kompressoranlage gemessen werden müssen, erforderlich. Da hier jeweils elektronische Steuerungen vorhanden sind, ist es nötig, möglichst viele dieser Schaltpunkte in einfacher Weise an die Steuerung anzuschließen. Deshalb ist der in den Figuren 8 und 9 dargestellte elektronische Druckschalter mit einem Bus-Anschluß in Form einer Bus-Steckverbindung 10 ausgerüstet, wobei die Bus-Steckverbindung 10 am Standardgehäuse 2 des elektronischen Druckschalters vorgesehen ist.

Aus dem in Figur 9 dargestellten Blockschaltbild des erfindungsgemäßen elektronischen Druckschalters mit Fernsteuerung gemäß Figur 8 geht hervor, daß an den wie im Zusammenhang mit Figur 7 beschrieben, an den Analog-Digitalwandler 18 angeschlossenen Microcomputer 20 ein Interface-Baustein 21 angeschlossen ist, der über entsprechende Leitungen an die Bus-Steckverbindung am Standardgehäuse 2 des elektronischen Druckschalters mit Fernsteuerung herausgeführt ist. Mittels des Interface-Bausteins 21 ist es möglich, die vom internen Microcomputer 20 ermittelten Daten sowohl nach draußen zu übertragen als auch Parameter von draußen in den Microcomputer 20 zu übernehmen.

Der in den Figuren 8 und 9 dargestellte elektronische Druckschalter mit Fernsteuerung behält seine Funktion auch dann bei, wenn ein übergeordneter Rechner ausfällt, da der Regelkreis mittels des internen Microcomputers 20 aufrecht erhalten bleibt.

In einer alternativen Ausführungsform ist es möglich, auf das Ausgangsrelais 14 bzw. die Relaiskontakte 15 zu verzichten und die Regelung mittels des vorstehend erwähnten übergeordneten Rechners vorzunehmen. Selbstverständlich ist es z.B. möglich, einen Analogausgang 5 wie im Falle des in Figur 2 dargestellten elektronischen Drucksensors herauszuführen, beispielsweise um ein örtliches Druckanzeigeinstrument anzuschließen.

## Patentansprüche

1. Elektronischer Drucksensor, der mittels einer Druckleitung, z.B. mittels eines Schlauchs, an eine zu überwachende Druckquelle angeschlossen ist, dadurch gekennzeichnet, daß der elektronische Drucksensor in einem separaten, in einem Schaltschrank aufnehmbaren Standardgehäuse untergebracht ist, dessen Bauform mit der anderer im Schaltschrank befindlicher elektrischer und/oder elektronischer Bausteine, z.B. mit der von Zeitrelais, übereinstimmt und an dem Klemmen (1, 6) für die Stromversorgung und die Signalausgabe sowie ein Anschlußnippel (3) für die Druckleitung vorgesehen sind.

2. Elektronischer Drucksensor nach Anspruch 1, an dessen Standardgehäuse (2) Halteglieder (4) für eine Schnellbefestigung an genormten Klemmschienen vorgesehen sind.

3. Elektronischer Drucksensor nach Anspruch 1 oder 2, der zur Überwachung bzw. zur Regelung eines Kompressors einer Pumpe od.dgl. eingesetzt und als Druckschalter ausgebildet ist.
